# EUROPÄISCHE PATENTSCHRIFT

(11) **EP 1 787 089 B1**
(45) Veröffentlichungstag und Bekanntmachung des Hinweises auf die Patenterteilung: **09.06.2010**
(21) Anmeldenummer: 05775935.9
(22) Anmeldetag: 12.08.2005
(51) Int. Cl.: G01C 21/36

(54) **VERFAHREN UND VORRICHTUNG ZUR AUTOMATISCHEN ZIELAUSWAHLVORGABE**
METHOD AND DEVICE FOR AUTOMATICALLY PRESELECTING TARGETS
PROCEDE ET DISPOSITIF DE DETERMINATION AUTOMATIQUE DE LA SELECTION D'UNE DESTINATION

(30) Priorität: 10.09.2004 DE 102004043852
(43) Veröffentlichungstag der Anmeldung: 23.05.2007
(73) Patentinhaber: Continental Automotive GmbH, 30165 Hannover (DE)
(72) Erfinder: BELHOULA, Abdelkarim, 35614 Asslar (DE); RUEHL, Hans-Wilhelm, 35606 Solms (DE); SCHREITER, Gerd, 35781 Weilburg (DE)
(86) Internationale Anmeldenummer: PCT/EP2005/053980
(87) Internationale Veröffentlichungsnummer: WO 2006/027307

(56) Entgegenhaltungen:
- EP-A- 1 203 931
- US-B1- 6 484 094

## Beschreibung

Die Erfindung betrifft ein Verfahren und eine Vorrichtung zum automatischen Vorgeben einer Auswahl an Zielen, die von Interesse sind. Moderne Computersysteme, wie beispielsweise Notebooks, PDAs, Navigationssysteme, Infotainmentsysteme aber auch Handys bieten dem jeweiligen Benutzer häufig die Möglichkeit, verschiedene Ziele auszuwählen, die für ihn von Interesse sind. Derartige Ziele, die von Interesse sind, können beispielsweise Sehenswürdigkeiten, Restaurants, bestimmte Geschäfte oder Freizeiteinrichtungen sein. Wesentlich für die Akzeptanz einer derartigen Funktionalität, die in Regel in Form eines Computerprogramms auf dem jeweiligen Computersystem gespeichert ist und auf diesem abgearbeitet wird, ist, dass der Benutzer mit geringem Aufwand das gewünschte Ziel auswählen kann und an die mit dem Ziel verbundenen Informationen gelangt.

Bekannt sind in diesem Zusammenhang Bedienoberflächen, so genannten Menüs, die das schnelle Finden des gewünschten Datensatzes erleichtern sollen. Ferner ist es bekannt, eine Liste der jeweiligen Daten anzubieten, aus der der Benutzer eine Auswahl treffen soll. Dies erfolgt beispielsweise für eine Auswahl von Namen aus einem Telefonbuch, einer Liste der letzten Ziele bei einem Navigationssystem oder einer Liste der spielbaren Titel bei einem MP3-Spieler.

Ferner ist es bekannt, in einem Startmenü eines Betriebssystems, eine Liste mit den am häufigsten verwendeten Kommandos anzuzeigen, die den Vorteil hat, dass diese Kommandos von dem Benutzer ausgewählt werden können, ohne dass er wissen muss, in welchem Submenü die entsprechenden Kommandos zu finden sind, und ohne dass sich der Benutzer durch die sonst vorhandene Menüstruktur zu dem entsprechenden Untermenü klicken muss.

Aus der DE 195 35 576 A1 ist ein Verfahren und eine entsprechende Vorrichtung zur Zielführungsunterstützung bekannt, bei dem bzw. der ein Vergleich der aktuellen Fahrtroute mit in einem Standardfahrtroutenspeicher abgelegten Fahrtrouten erfolgt. Daraus wird dann unter Wahrscheinlichkeitsgesichtspunkten das aktuelle Fahrtziel vorhergesagt. Die aktuelle Fahrtroute wird in einem Zwischenspeicher zwischengespeichert und zwar für eine vorgebbare Zeitdauer. Falls die Häufigkeit der jeweiligen Fahrtroute in dem Zwischenspeicher einen vorgegebenen Schwellenwert überschreitet, wird die entsprechende Fahrtroute in dem Standardfahrtroutenspeicher abgelegt. Die jeweiligen Standardfahrtrouten werden bevorzugt zusammen mit Zeitinformationen abgespeichert, die beispielsweise einen Wochentag oder eine Tageszeit umfassen.

Aus der WO 00/12967 ist eine Navigationsvorrichtung bekannt, die ausgebildet ist zum Erstellen eines Vorschlages für mindestens ein Fahrziel oder eine Fahrtroute, ohne dass der jeweilige Benutzer eine aufwändige Eingabe machen muss. Zu diesem Zweck werden in der Historie gespeicherte Fahrtroutenmerkmale zugeordnet, wie beispielsweise ein Startort, eine Startzeit oder der entsprechende Tag. Somit ist jeder Fahrtroute ein Merkmalssatz zugeordnet. Anhand erfasster aktueller Merkmale, wie aktueller Tag, aktuelle Zeit, aktueller Ort erfolgt ein Vergleich mit den gespeicherten Merkmalssätzen. Durch eine fest vorgegebene Bewertung zwischen den aktuellen und den gespeicherten Merkmalen werden gewichtete Abweichungen für die jeweiligen Merkmalssätze ermittelt und abhängig von diesen die wahrscheinlichste Fahrtroute prognostiziert. Diese Fahrtroute wird dann dem Benutzer angeboten.

Aus der EP 1 098 287 A1 ist ein Verfahren zum Planen einer Fahrtroute bekannt. Durch einen Benutzer können geografische Ziele über eine Eingabeschnittstelle in das Navigationssystem eingegeben werden. Zusammen mit dem Ziel werden Zusatzdaten, wie beispielsweise die aktuelle Zeit, zu der die Eingabe erfolgt, der Ort an dem die Eingabe erfolgt, der entsprechende Wochentag oder die entsprechende Saison gespeichert. Während des Betriebs des Navigationssystems werden dann die aktuellen Zusatzdaten mittels fest vorgegebener Gewichtungsprofile gewichtet und daraus Wahrscheinlichkeitsfaktoren ermittelt. Abhängig von diesem Faktor werden dann die einzelnen gespeicherten Ziele sortiert und dem Benutzer dargeboten.

Aus der EP 1 203 931 A1 ist ein Verfahren zum Anzeigen von mindestens einem Ziel bekannt und zwar in einer vorgebbaren Reihenfolge. Die vorgebbare Reihenfolge hängt ab von einer Entfernung zwischen einer variablen Position des Informationsbildschirms und dem entsprechenden Ziel, einem Signifikanzwert des entsprechenden Ziels und gegebenenfalls von einem Zoom-Faktor des Informationsbildschirms.

Die Aufgabe der Erfindung ist es, ein Verfahren und eine Vorrichtung zum automatischen Vorgeben einer Auswahl an Zielen, die von Interesse sind, zu schaffen, das bzw. die einfach und komfortabel ist.

Die Aufgabe wird gelöst durch die Merkmale der unabhängigen Patentansprüche. Vorteilhafte Ausgestaltungen der Erfindung sind in den abhängigen Ansprüchen gekennzeichnet. Die Erfindung zeichnet sich aus durch ein Verfahren und eine entsprechende Vorrichtung zum automatischen Vorgeben einer Auswahl an Zielen, die von Interesse sind. Jedem einzelnen Ziel sind kennzeichnende Parameter zugeordnet. Ein Präferenzwert für das jeweilige Ziel wird mittels eines für mehrere Ziele vorgegebenen Präferenzmodells abhängig von den kennzeichnenden Parametern ermittelt. Abhängig von den jeweiligen Präferenzwerten werden die einzelnen Ziele sortiert und in dieser Reihenfolge dargeboten. Das Präferenzmodell wird abhängig von kennzeichnenden Parametern eines dann tatsächlich ausgewählten Ziels angepasst. Auf diese Weise werden die Präferenzen eines jeweiligen Benutzers gelernt, indem das Präferenzmodell den Benutzer beobachtet und abhängig von seinem tatsächlichen Auswahlverhalten dann das Präferenzmodell angepasst wird. Dies ermöglicht es auf einfache Weise, Ziele, die von Interesse sind und die beispielsweise neu hinzugekommen sind, dem Benutzer entsprechend seiner Präferenzen anzubieten. Auf diese Weise kann dann der Benutzer deutlich von aufwendigen Suchprozessen erleichtert werden. Darüber hinaus ist auch der Speicherbedarf für das Präferenzmodell wenig abhängig von der Anzahl der Ziele, die von Interesse sind. Dies ist insbesondere von Vorteil bei einer sehr großen Anzahl an Zielen, die von Interesse sind.

Das Präferenzmodell umfasst Wichtungswerte, die den kennzeichnenden Parametern direkt oder mittelbar zugeordnet sind. Das Anpassen des Präferenzmodells erfolgt mittels Anpassens eines oder mehrerer Wichtungswerte. Auf diese Weise ist das Präferenzmodell sehr einfach und gleichzeitig mit hoher Güte anpassbar. Die Wichtungswerte können so beispielsweise direkt als Faktoren den Parametern zugeordnet sein oder auch Bestandteil eines funktionalen Zusammenhangs zwischen dem jeweiligen kennzeichnenden Parameter und dem jeweiligen Präferenzwert sein. So können dann auch Zwischenwerte ermittelt werden, die wiederum mittels entsprechender Wichtungswerte verknüpft werden und letztlich den Präferenzwerten zugeordnet werden.

Besonders vorteilhaft ist es, wenn das Präferenzmodell ein neuronales Netz umfasst. Ein derartiges neuronales Netz ermöglicht bei geeigneter Netzstruktur auch das Lernen sehr komplexer Benutzerpräferenzen.

Es hat sich gezeigt, dass Präferenzen des Benutzers mittels des Präferenzmodells besonders effizient abgebildet werden können, wenn mindestens ein kennzeichnender Parameter charakteristisch ist für eine örtliche Abhängigkeit des Ziels. In diesem Zusammenhang ist es vorteilhaft, wenn mindestens ein kennzeichnender Parameter repräsentativ ist für eine Entfernung von einer aktuellen Position und/oder wenn mindestens ein kennzeichnender Parameter repräsentativ ist für eine Entfernung von einem Fahrtziel. Ferner hat es sich auch als vorteilhaft erwiesen, wenn mindestens ein kennzeichnender Parameter repräsentativ ist für die Art der Lage des Ziels.

Ferner ist es vorteilhaft, wenn mindestens ein kennzeichnender Parameter das jeweilige Ziel klassifiziert. Die Klassifizierung kann in diesem Zusammenhang z. B. abhängig von der Art des Ziels und so beispielsweise bei Hotels der Anzahl der Sterne des jeweiligen Hotels entsprechen.

Ferner ist es vorteilhaft, wenn mindestens ein kennzeichnender Parameter repräsentativ ist für ein Unternehmenskennzeichen oder eine Marke. Ferner ist es vorteilhaft, wenn mindestens ein kennzeichnender Parameter repräsentativ ist für die Art der Küche.

Ferner ist es vorteilhaft, wenn mindestens ein kennzeichnender Parameter charakteristisch ist für eine zeitliche Abhängigkeit des Ziels.

In einer weiteren vorteilhaften Ausgestaltung der Erfindung sind die Ziele jeweils einem Zieltyp zugeordnet. Den jeweiligen Zieltypen sind kennzeichnende Zieltyp-Parameter zugeordnet. Ein Präferenzwert für den jeweiligen Zieltyp wird mittels eines für mehrere Zieltypen vorgegebenen weiteren Präferenzmodells abhängig von den kennzeichnenden Zieltyp-Parametern ermittelt. Abhängig von den jeweiligen Präferenzwerten werden die einzelnen Zieltypen sortiert und in dieser Reihenfolge dargeboten. Das weitere Präferenzmodell wird abhängig vom kennzeichnenden Zieltyp-Parametern eines dann tatsächlich ausgewählten Zieltyps angepasst.

Auf diese Weise werden die Präferenzen eines jeweiligen Benutzers gelernt im Hinblick auf die Zieltypen, indem das weitere Präferenzmodell den Benutzer beobachtet und abhängig von seinem tatsächlichen Auswahlverhalten dann das weitere Präferenzmodell angepasst wird. Dies ermöglicht es auf einfache Weise, Zieltypen dem Benutzer entsprechend seiner Präferenzen anzubieten. Auf diese Weise kann dann der Benutzer deutlich von aufwendigen Suchprozessen erleichtert werden. Darüber hinaus ist auch der Speicherbedarf für das weitere Präferenzmodell wenig abhängig von der Anzahl der Ziele, die von Interesse sind. Dies ist insbesondere von Vorteil bei einer sehr großen Anzahl an Zieltypen.

Das weitere Präferenzmodell kann auch unabhängig von dem Präferenzmodell bezüglich der Ziele, die von Interesse sind, eingesetzt werden.

In diesem Zusammenhang ist es vorteilhaft, wenn das weitere Präferenzmodell Wichtungswerte umfasst, die den kennzeichnenden Zieltyp-Parametern direkt oder mittelbar zugeordnet sind, und wenn das Anpassen des weiteren Präferenzmodells mittels Anpassens eines oder mehrerer Wichtungswerte erfolgt. Auf diese Weise ist das weitere Präferenzmodell sehr einfach und mit hoher Güte anpassbar.

In einer weiteren vorteilhaften Ausgestaltung der Erfindung umfasst das weitere Präferenzmodell ein neuronales Netz. Auf diese Weise können die Benutzerpräferenzen im Hinblick auf den jeweiligen Zieltyp, auch wenn sie sehr komplexer Natur sind, durch entsprechendes Trainieren des neuronalen Netzes sehr präzise gelernt werden.

In einer weiteren vorteilhaften Ausgestaltung der Erfindung ist mindestens ein kennzeichnender Zieltyp-Parameter charakteristisch für eine örtliche Abhängigkeit des Zieltyps. Dies hat den Vorteil, dass Benutzerpräferenzen hinsichtlich des Zieltyps sehr effizient durch das weitere Präferenzmodell abgebildet werden können. In diesem Zusammenhang ist es vorteilhaft, wenn mindestens ein kennzeichnender Zieltyp-Parameter charakteristisch ist für eine zeitliche Abhängigkeit des Zieltyps. Auch auf diese Weise können Benutzerpräferenzen hinsichtlich des Zieltyps sehr effizient durch das weitere Präferenzmodell abgebildet werden.

In diesem Zusammenhang ist es ferner vorteilhaft, wenn mindestens ein kennzeichnender Zieltyp-Parameter repräsentativ ist für den jeweiligen Tag, Monat, Jahr oder die Jahreszeit oder einen vorgegebenen Jahresabschnitt. In diesem Zusammenhang ist es ferner vorteilhaft, wenn mindestens ein kennzeichnender Zieltyp-Parameter repräsentativ ist für einen Tageszeitbereich. Unter einem Tageszeitbereich wird ein vorgegebener Zeitbereich des Tages, so z.B. Vormittag, Mittag, Abend oder auch Rush Hour und dergleichen verstanden.

In diesem Zusammenhang ist es ferner vorteilhaft, wenn mindestens ein kennzeichnender Zieltyp-Parameter repräsentativ ist für eine Fahrzeitdauer. In diesem Zusammenhang kann so z. B. vorteilhaft berücksichtigt werden, ob der Benutzer typischerweise bald eine Pause einlegt und so ein entsprechender Zieltyp für Pausen relevant ist.

In einer weiteren vorteilhaften Ausgestaltung der Erfindung ist mindestens ein kennzeichnender Zieltyp-Parameter charakteristisch für eine Betriebsgröße eines Fahrzeugs. Unter einer Betriebsgröße eines Fahrzeugs werden Messgrößen verstanden, die durch Sensoren erfasst werden, die in einem Fahrzeug angeordnet sind, oder auch von diesen Messgrößen abgeleitete Schätzgrößen. Auf diese Weise können so auch Zieltypen bevorzugt ausgewählt werden, die typisch sind für einen bestimmten Fahrzeugzustand, so z.B. ein Zieltyp Tankstellen, wenn ein Füllstand eines Tanks eines Kraftfahrzeugs einen vorgegebenen Schwellenwert unterschritten hat.

Ausführungsbeispiele der Erfindung sind im Folgenden anhand der schematischen Zeichnungen näher erläutert. Es zeigen:
- Figur 1: eine Auswahlvorrichtung, die ein erstes und ein zweites Präferenzenmodell umfasst,
- Figur 2: eine Struktur des ersten Präferenzenmodells,
- Figur 3: ein Ablaufdiagramm eines Programms, das in der Aus- wahlvorrichtung gespeichert ist und in dieser abge- arbeitet wird zur Auswahl von Zielen,
- Figur 4: eine Liste kennzeichnender Parameter,
- Figur 5: eine Liste an Zielen, die von Interesse sind,
- Figur 6: ein weiteres Ablaufdiagramm eines Programms, das in der Auswahlvorrichtung gespeichert ist und in die- ser abgearbeitet wird zum Vorgeben einer Auswahl an Zieltypen,
- Figur 7: eine Tabelle verschiedener Zieltyp-Parameter und
- Figur 8: eine Tabelle verschiedener Zieltypen.

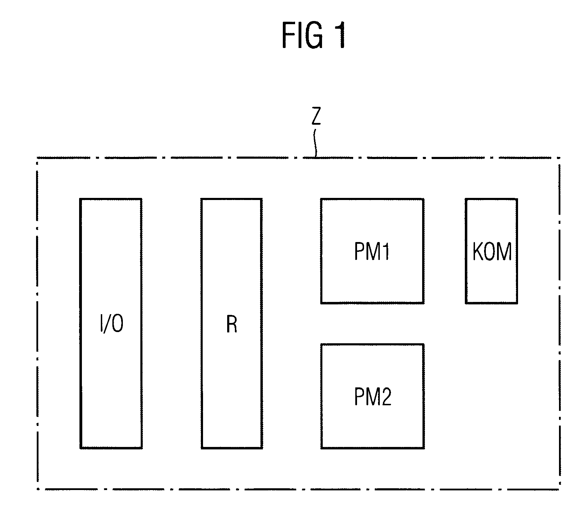

Eine Auswahlvorrichtung Z (Figur 1) umfasst eine Ein-/Ausgabeeinheit I/O, eine Recheneinheit R, ein erstes Präferenzmodell PM1, ein zweites Präferenzmodell PM2 und eine Kommunikationseinheit KOM. Die Ein-/Ausgabeeinheit I/O umfasst vorzugsweise einen Bildschirm und vorzugsweise eine Tastatureinheit. Alternativ kann auch oder zusätzlich kann auch Bildschirm zur Eingabe von Daten als so genanntes Touchscreen ausgebildet sein. Die Recheneinheit umfasst vorzugsweise einen Mikroprozessor und einen Daten- und einen Programmspeicher.

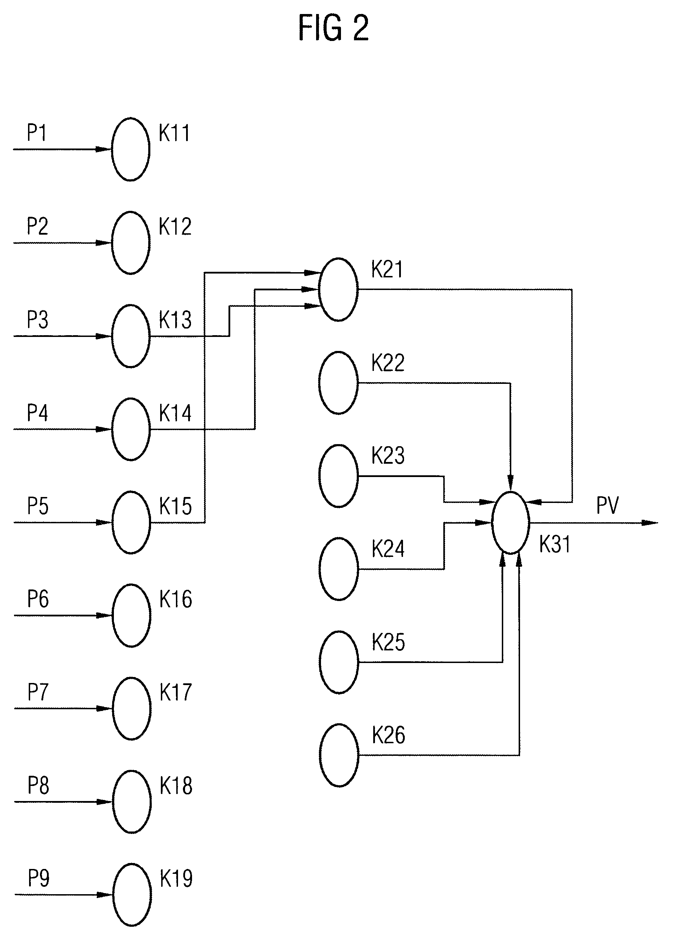

Ferner umfasst die Auswahlvorrichtung eine Kommunikationseinheit KOM, über die die Auswahlvorrichtung mit anderen Vorrichtungen, wie beispielsweise anderen Steuergeräten eines Kraftfahrzeugs kommunizieren kann, oder mittels derer sie Ortungssignale beispielsweise eines GPS-Systems empfangen kann. Die Auswahlvorrichtung Z kann beispielsweise ein Bestandteil eines Navigationssystems sein. Sie kann jedoch auch beispielsweise ein PDA sein, also ein so genannter Handheld-Computer. Sie kann aber auch ein beliebiger anderer Computer oder beispielsweise Bestandteil eines Mobiltelefons sein. Anhand der Figur 2 ist eine beispielhafte Struktur des ersten Präferenzenmodells PM1 anhand des Blockschaltbildes der Figur 2 näher erläutert. Kennzeichnende Parameter P1 bis P9 sind Eingangsgrößen des ersten Präferenzmodells PM1, das in Form eines Netzes strukturiert ist. Das Netz umfasst Knoten K11 bis K19 einer Eingangsschicht, denen jeweils ein kennzeichnender Parameter P1 bis P9 zugeführt ist. Die Ausgänge der Knoten K11 bis K19 sind mit Knoten K21 bis K26 einer weiteren Schicht verknüpft. Sie können aber auch direkt mit einem oder mehreren Knoten K31 einer Ausgangsschicht des Netzes verknüpft sein. Die Knoten K21 bis K26 der weiteren Schicht sind dann mit dem Knoten K31 der Ausgangsschicht des Netzes verknüpft. Anhand des Knotens K21 ist beispielhaft eine mögliche Verknüpfung des Knotens K21 mit Ausgängen der Knoten K13, K14, K15 der Eingangsschicht dargestellt. Die Verknüpfung der Knoten K11 bis K31 des Netzes kann beliebig ausgestaltet sein.

Den jeweiligen Knoten K11 bis K31 sind Wichtungswerte zugeordnet. Mittels der jeweiligen Wichtungswerte der Knoten K11 bis K31 erfolgt eine Abbildung der Eingangsgrößen der jeweiligen Knoten K11 bis K31 auf ihre Ausgangsgröße. So kann der jeweilige Wichtungswert ein Faktor sein, mit dem die jeweilige Eingangsgröße des jeweiligen Knotens K11 bis K31 multipliziert wird oder der Wichtungswert kann auch ein anderer beliebiger Funktionsparameter einer mathematischen Funktion sein, die dem jeweiligen Knoten K11 bis K31 zugeordnet ist. Das Netz kann eine beliebige Anzahl an Schichten an Knoten K11 bis K31 umfassen. Bevorzugt ist das Netz ein neuronales Netz. Die Struktur und auch das Anpassen neuronaler Netze ist dem zuständigen Fachmann beispielsweise aus dem Fachbuch "Theorie der neuronalen Netze: Eine systematische Einführung", Raoul Rojas, Berlin, Springer, 1993, ISBN 3-540-56353-9 bekannt. Im Falle des neuronalen Netzes können die Knoten K11 bis K31 beispielsweise eine Sigmoid-Funktion umfassen.

Die Ausgangsgröße des Knotens K31 der Ausgangsschicht des Netzes ist ein Präferenzwert PV.

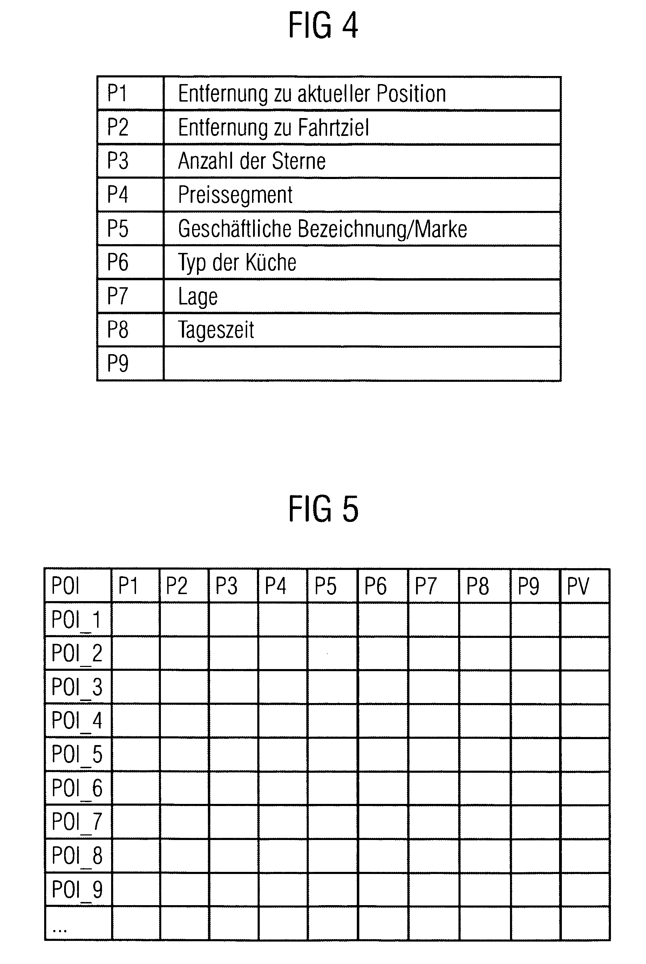

Mögliche Ausführungsformen der kennzeichnenden Parameter P1 bis P9 sind anhand der Tabelle der Figur 4 dargestellt. In diesem Fall ist der kennzeichnende Parameter P1 eine Entfernung zu der aktuellen Position. Demnach ist hier für das jeweilige Ziel seine Entfernung zu der aktuellen Position, die beispielsweise mittels des GPS-Systems ermittelt wird, abgelegt. Der zweite kennzeichnende Parameter P2 ist die Entfernung des jeweiligen Ziels, das von Interesse ist, zu dem aktuellen Fahrtziel. Das aktuelle Fahrtziel kann beispielsweise durch den Benutzer eingegeben werden oder auch mittels eines Navigationssystems bestimmt werden.

Der dritte kennzeichnende Parameter P3 klassifiziert das jeweilige Ziel und umfasst so z.B. eine Anzahl an Sternen, wie dies beispielsweise bei Hotels oder Restaurants oder dergleichen üblich ist. Der vierte kennzeichnende Parameter P4 kennzeichnet das jeweilige Preissegment des Ziels, das von Interesse ist. Er kann z. B. Werte "Hochpreis", "mittlerer Preis", und "niedriger Preis" annehmen. Der fünfte kennzeichnende Parameter P5 ist eine geschäftliche Bezeichnung oder eine Marke. Der fünfte Parameter P5 kann auch in Form von mehreren Parametern vorhanden sein, denen jeweils eine geschäftliche Bezeichnung oder Marke zugeordnet ist. Dem fünften Parameter P5 kann so z. B. die geschäftliche Bezeichnung einer bestimmten Fastfood-Restaurantkette oder einer Hotelkette oder einer Einzelhandelskette zugeordnet sein.

Der sechste Parameter P6 ist dem jeweiligen Typ der Küche zugeordnet, dies ist insbesondere von Relevanz bei Zielen, die von Interesse sind, welche beispielsweise Restaurants oder Hotels sind. Der Typ der Küche kann beispielsweise Werte wie Deutsche Küche, Italienische Küche, Französische Küche und Chinesische Küche annehmen. Ein siebter kennzeichnender Parameter kennzeichnet eine Lage des jeweiligen Ziels. Die Lage kann beispielsweise Werte annehmen wie "nahe zu einem Flughafen", "fern von einem Flughafen", "nahe zu einem Bahnhof", "fern von einem Bahnhof", "nahe zu einer Autobahn", "fern von einer Autobahn", "ruhig", "laut", "Erholungsort" und dergleichen. Ein achter kennzeichnender Parameter P8 ist einer Tageszeit oder einem Tageszeitabschnitt zugeordnet. So kann er beispielsweise Werte wie "Abend", "Morgen", "Mittag" annehmen. Der achte kennzeichnende Parameter P8 ist somit charakteristisch für eine zeitliche Abhängigkeit des jeweiligen Ziels POI. Ihm kann beispielsweise auch ein bestimmter Wochentag, eine bestimmte Woche, ein bestimmter Monat, eine bestimmte Jahreszeit oder ein sonstiger Jahresabschnitt oder dergleichen zugeordnet sein.

Figur 5 zeigt eine Tabelle verschiedener Ziele POI, die von Interesse sind mit den ihnen jeweils zugeordneten kennzeichnenden Parametern P1 bis P9 und den jeweiligen mittels des ersten Präferenzmodells PM1 ermittelten Präferenzwerten PV. Die Tabelle stellt die jeweiligen Präferenzwerte PV und Werte der jeweiligen kennzeichnenden Parameter P1 bis P9 bezogen auf die beispielhaften dargestellten konkreten Ziele POI_1 bis POI_9, die von Interesse sind, in Form von leeren Kästchen dar, die bei der konkreten Umsetzung mit entsprechenden Zahlenwerten belegt sind. Die den jeweiligen Zielen POI zugeordneten Werte der kennzeichnenden Parameter P1 bis P9 können teilweise fest vorgegeben sein, wie z. B. der sechste Parameter P6, der Typ der Küche oder auch zeitlich veränderbarer Natur sein, wie beispielsweise der zweite kennzeichnende Parameter P2, die Entfernung zu dem aktuellen Fahrtziel. Gegebenenfalls können bei einzelnen der Zielen POI auch nur eine Teilmenge der kennzeichnenden Parameter P1 bis P9 mit Werten belegt sein.

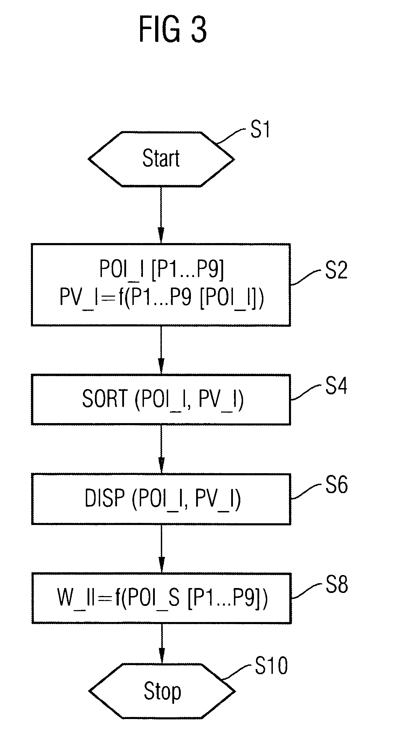

Während des Betriebs der Auswahlvorrichtung Z wird ein Programm abgearbeitet, das in ihrem Programmspeicher gespeichert ist. Das Programm wird in einem Schritt S1 (Figur 3) gestartet, in dem gegebenenfalls Variablen initialisiert werden.

In einem Schritt S2 werden die jeweils relevanten Ziele POI_I, die von Interesse sind, beispielsweise von dem Datenspeicher der Recheneinheit R oder auch beispielsweise mittels der Kommunikationseinheit KOM empfangen durch entsprechende Anforderung relevanter Ziele POI_I, die aktuell von Interesse sind, an gegebenenfalls eine geografisch entfernt liegende Diensteinheit, die derartige Ziele POI auf Anforderung zur Verfügung stellt. Darüber hinaus werden in dem Schritt S2 die den relevanten Zielen POI_I zugeordneten Werte ihrer kennzeichnenden Parameter P1 bis P9 ebenfalls aus dem Datenspeicher eingelesen oder, falls sie sich zeitlich oder örtlich verändern, abhängig von den aktuellen Zeit- oder Ortskoordinaten neu berechnet.

Anschließend werden in dem Schritt S2 die jeweiligen relevanten Präferenzwerte PV_I abhängig von den Werten der kennzeichnenden Parameter P1 bis P9 der relevanten Ziele POI_I mittels des ersten Präferenzenmodells gemäß der Figur 2 ermittelt.

In einem Schritt S4 erfolgt ein Sortieren SORT der einzelnen relevanten Ziele POI_I, die von Interesse sind, abhängig von den ihnen zugeordneten Präferenzwerten PV_I.

In einem Schritt S6 werden dann die gemäß Schritt S4 sortierten relevanten Ziele POI_I in der Reihenfolge ihres Präferenzwertes PV_I über die Ein-/Ausgabeeinheit I/O dargestellt. Die Darstellung erfolgt bevorzugt auf einem Bildschirm DISP. Neben der Darstellung der relevanten Ziele POI_I sortiert nach ihren Präferenzwerten PV_I können auch z. B. die zuletzt ausgewählten Ziele POI auf dem Bildschirm dargestellt werden. Der Benutzer hat nun die Möglichkeit eines der Ziele POI_I auszuwählen und sich weitere Informationen über das jeweilige ausgewählte Ziel POI_S zu beschaffen oder auch beispielsweise ein Navigationssystem zu veranlassen, den Benutzer zu dem ausgewählten Ziel POI_S zu führen. In einem Schritt S8 erfolgt dann ein Anpassen von Wichtungswerten W_II des ersten Präferenzmodells abhängig von den Werten der kennzeichnenden Parameter P1 bis P9 des tatsächlich ausgewählten Ziels POI_S. In diesem Zusammenhang können alle Wichtungswerte W_II des ersten Präferenzmodells PM1 angepasst werden oder auch nur eine beliebige Teilmenge von ihnen. Zu diesem Zweck kann ein für den Fachmann bekanntes Anpassungsverfahren eingesetzt werden. So kann z. B., falls das erste Präferenzmodell ein neuronales Netz umfasst, ein so genannter Back Propagation-Lernalgorithmus eingesetzt werden.

In einem Schritt S10 wird anschließend das Programm beendet. Das Programm wird unter Umständen wieder aufgerufen, wenn von dem Benutzer erneut die Auswahl eines Ziels POI angefordert wird.

Bevorzugt umfasst die Auswahlvorrichtung Z ferner das zweite Präferenzmodell PM2. Das zweite Präferenzmodell PM2 entspricht in seiner Struktur dem ersten Präferenzmodell PM1. An den entsprechenden Knoten K1 bis K19 (Figur 2) seiner Eingangsschicht sind statt der Parameter P1 bis P9 der Figur 2 Zieltyp-Parameter PT1 bis PT9 die Eingangsgrößen. In seinem entsprechenden Ausgangsknoten K31 wird statt des Präferenzwertes PV ein Zieltyp-Präferenzwert PVT ermittelt.

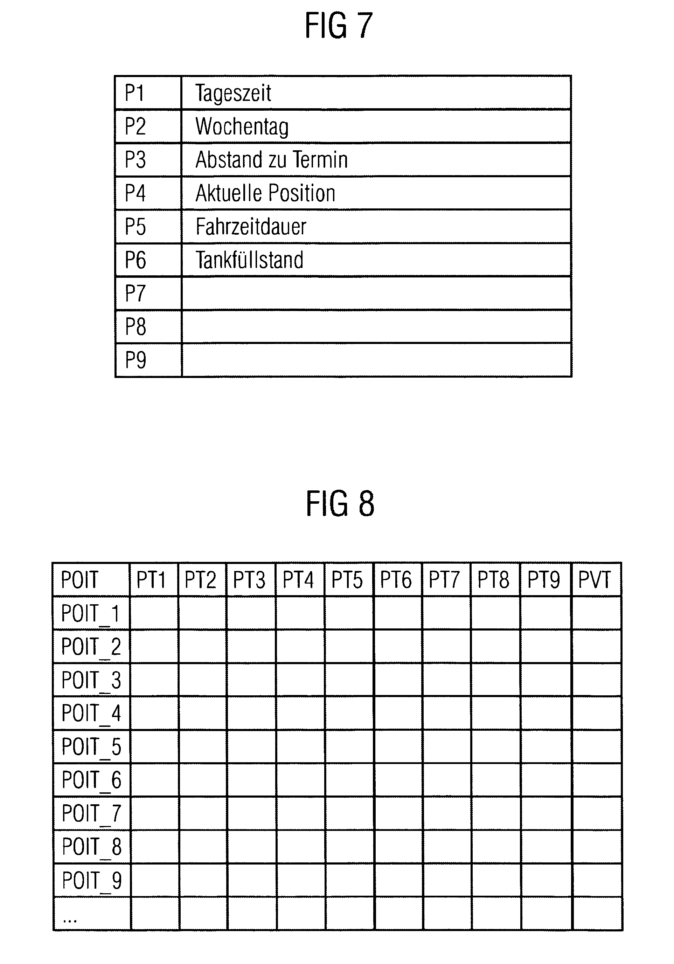

Beispiele für mögliche Zieltyp-Parameter PT1 bis PT9 sind in der Tabelle der Figur 7 dargestellt. So ist dem ersten Zieltyp-Parameter PT1 eine Tageszeit zugeordnet. Alternativ kann hier auch ein bestimmter Zeitabschnitt eines Tages zugeordnet sein, wie z. B. "Vormittag", "Mittag", "Nachmittag", "Abend" oder "Rush Hour". Einem zweiten Zieltyp-Parameter PT2 ist der jeweilige Wochentag zugeordnet. So kann z. B. der zweite Zieltyp-Parameter PT2 auch aufgespalten sein in 7 Zieltyp-Parameter - für jeden Wochentag einer. Entsprechendes gilt auch für den ersten Zieltyp-Parameter PT1.

Dem dritten Zieltyp-Parameter PT3 kann beispielsweise ein zeitlicher Abstand zu dem nächsten Termin zugeordnet sein, der beispielsweise aus einem elektronischen Terminkalender zugeordnet wird. Einem vierten Zieltyp-Parameter PT4 kann beispielsweise die aktuelle Position der Auswahlvorrichtung Z zugeordnet sein. Dem fünften Zieltyp-Parameter PT5 kann die Fahrtzeitdauer, also so z. B. die Zeitdauer seit dem letzten Abstellen eines Motors eines Kraftfahrzeuges oder auch die noch bis zum beabsichtigten Zielort verbleibende Zeitdauer zugrunde gelegt werden.

Einem sechsten Zieltyp-Parameter PT6 ist eine Betriebsgröße eines Fahrzeugs zugeordnet, in dem die Auswahlvorrichtung Z angeordnet sein kann. Diese Betriebsgröße kann beispielsweise ein Tankfüllstand sein.

In der Tabelle der Figur 8 sind verschiedene Zieltypen POIT und zwar die relevanten Zieltypen POIT_1 bis POIT_9 entsprechend der Ziele POI der Figur 5 mit den ihnen zugeordneten Werten ihrer Zieltyp-Parameter PT1 bis PT9 und ihres jeweiligen Zieltyppräferenzwertes PVT dargestellt. Auch hier sind nur leere Kästchen dargestellt, die während des Betriebs der Auswahlvorrichtung Z mit entsprechenden Werten belegt werden. Zieltypen POIT können beispielsweise Sehenswürdigkeiten, Hotels, Flughäfen, Bahnhöfe, Restaurants, Geschäfte, Tankstellen, Freizeiteinrichtungen und dergleichen sein.

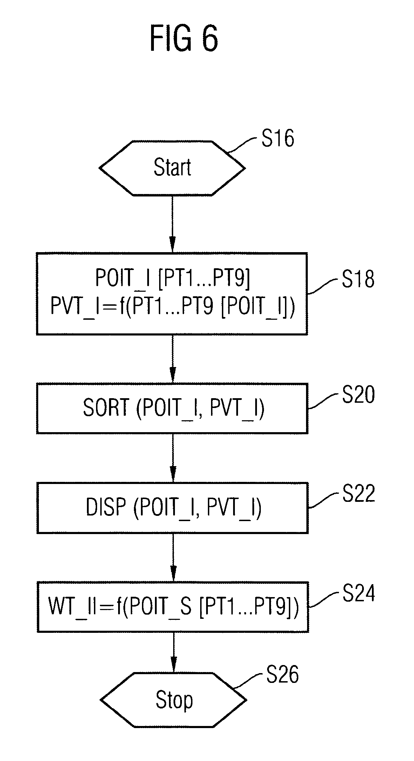

Ein weiteres Programm ist in dem Programmspeicher der Recheneinheit R gespeichert und wird während des Betriebs der Auswahlvorrichtung Z in der Recheneinheit R abgearbeitet. Das weitere Programm wird in einem Schritt S16 (Figur 6) gestartet, in dem gegebenenfalls Variablen initialisiert werden.

In einem Schritt S18 werden relevante Zieltypen POIT_I aus dem Datenspeicher der Recheneinheit R eingelesen und/oder über die Kommunikationseinheit KOM von einer anderen Einheit eingelesen. Den jeweiligen relevanten Zieltypen POIT_I sind dann ebenfalls entsprechende Werte von Zieltyp-Parametern PT1 bis PT9 zugeordnet entsprechend dem Schritt S2. Diese können entweder fest vorgegeben sein oder auch abhängig von z. B. der aktuellen Zeit oder dem aktuellen die Zeit charakterisierenden Parameter oder einem Ortsparameter oder einer Betriebsgröße ermittelt werden.

Ferner werden in dem Schritt S18 die jeweiligen relevanten Zieltyp-Präferenzwerte PVT_I für die jeweiligen relevanten Zieltypen POIT_I abhängig von den ihnen zugeordneten Werten der Zieltyp-Parameter PT1 bis PT9 mittels des zweiten Präferenzmodells PM2 ermittelt. Anschließend werden dann die relevanten Zieltypen POIT_I nach den ihnen zugeordneten Zieltyp-Präferenzwerten PVT_I sortiert und in einem Schritt S8 über eine Anzeigefunktion DISP, bevorzugt in Form einer Liste dem Benutzer an der Ein-/Ausgabeeinheit I/O und bevorzugt dort an dem ihr zugeordneten Bildschirm zur Auswahl dargeboten. Dabei kann die Anzahl der dargebotenen Zieltypen POIT_I auch auf einen vorgegebenen maximalen Wert begrenzt sein. Unter den dargebotenen Zieltypen POIT_I können sich auch Zieltypen befinden, die zuletzt oder besonders häufig aufgerufen wurden.

Der Benutzer hat dann die Möglichkeit, einen Zieltyp POIT_I zu selektieren. Hat er sich für einen Zieltyp POIT_I entschieden, der dann als selektierter Zieltyp POIT_S bezeichnet wird, so werden ihm anschließend die Ziele POI dargeboten, die dem selektierten Zieltyp POIT_S zugeordnet sind. Beispielsweise hat der Benutzer Hotels als Zieltyp ausgewählt und somit werden dann als Ziele entsprechende Hotels in einem nächsten Schritt dem Benutzer angeboten und zwar bevorzugt, aber nicht notwendig gemäß der Vorgehensweise des Programms gemäß der Figur 3.

In einem Schritt S24 werden dann den Wichtungswerten W_II entsprechende Zieltyp-Wichtungswerte WT_II angepasst abhängig von den Werten der Zieltyp-Parameter PT1 bis PT9, die dem selektierten Zieltyp POIT_S zugeordnet sind. Dies erfolgt entsprechend zu der Vorgehensweise des Schrittes S8. Anschließend wird das Programm in einem Schritt S26 beendet. Es wird bevorzugt erneut aufgerufen, wenn eine erneute Anforderung eines Ziels POI durch den Benutzer erfolgt.

## Patentansprüche

1. Verfahren zum automatischen Vorgeben einer Auswahl an Zielen (POI), die von Interesse sind, bei dem
- jedem einzelnen Ziel (POI_I) kennzeichnende Parameter (P1 - P9) zugeordnet sind,
- ein Präferenzwert (PV_I) für das jeweilige Ziel (POI_I) mittels eines für mehrere Ziele (POI) vorgegebenen Präferenzmodells (PM1) abhängig von den kennzeichnenden Parametern (P1 - P9) ermittelt wird, wobei das Präferenzmodel (PM1) Wichtungswerte (W_II) umfasst, die den kennzeichnenden Parametern (P1 - P9) direkt oder mittelbar zugeordnet sind,
- abhängig von den jeweiligen Präferenzwerten (PV_I) die einzelnen Ziele (POI_I) sortiert werden und in dieser Reihenfolge dargeboten werden,
- das Präferenzmodell (PM1) abhängig von kennzeichnenden Parametern (P1 - P9) eines dann tatsächlich ausgewählten Ziels (POI_S) angepasst wird und zwar mittels Anpassens eines oder mehrerer Wichtungswerte (W_II).

2. Verfahren nach Anspruch 1, bei dem das Präferenzmodell (PM1) ein neuronales Netz umfasst.

3. Verfahren nach einem der vorstehenden Ansprüche, bei dem mindestens ein kennzeichnender Parameter (P1 - P9) charakteristisch ist für eine örtliche Abhängigkeit des Ziels (POI).

4. Verfahren nach Anspruch 3, bei dem mindestens ein kennzeichnender Parameter (P1 - P9) repräsentativ ist für eine Entfernung von einer aktuellen Position.

5. Verfahren nach einem der Ansprüche 3 oder 4, bei dem mindestens ein kennzeichnender Parameter (P1 - P9) repräsentativ ist für eine Entfernung von einem Fahrtziel.

6. Verfahren nach einem der Ansprüche 4 bis 5, bei dem mindestens ein kennzeichnender Parameter (P1 - P9) repräsentativ ist für die Art der Lage des Ziels.

7. Verfahren nach einem der vorstehenden Ansprüche, bei dem mindestens ein kennzeichnender Parameter (P1 - P9) das jeweilige Ziel (POI_I) klassifiziert.

8. Verfahren nach einem der vorstehenden Ansprüche, bei dem mindestens ein kennzeichnender Parameter (P1 - P9) repräsentativ ist für ein Unternehmenskennzeichen oder eine Marke.

9. Verfahren nach einem der vorstehenden Ansprüche, bei dem mindestens ein kennzeichnender Parameter (P1 - P9) repräsentativ ist für die Art der Küche.

10. Verfahren nach einem der vorstehenden Ansprüche, bei dem mindestens ein kennzeichnender Parameter (P1 - P9) charakteristisch ist für eine zeitliche Abhängigkeit des Ziels (POI).

11. Verfahren nach einem der vorstehenden Ansprüche, bei dem die Ziele (POI) jeweils einem Zieltyp (POIT) zugeordnet sind und den jeweiligen Zieltypen (POIT_I) kennzeichnende Zieltyp-Parameter (PT1 - PT9) zugeordnet ist,
- ein Zieltyp-Präferenzwert (PVT) für den jeweiligen Zieltyp (POIT_I) mittels eines für mehrere Zieltypen (POIT) vorgegebenen weiteren Präferenzmodells (PM2) abhängig von den kennzeichnenden Zieltyp-Parametern (PT1 - PT9) ermittelt wird,
- abhängig von den jeweiligen Zieltyp-Präferenzwerten (PVT_I) die einzelnen Zieltypen (POIT_I) sortiert werden und in dieser Reihenfolge dargeboten werden,
- das weitere Präferenzmodell (PM2) abhängig vom kennzeichnenden Zieltyp-Parametern (PT1 - PT9) eines dann tatsächlich ausgewählten Zieltyps (POIT_S) angepasst wird.

12. Verfahren nach Anspruch 11, bei dem das weitere Präferenzmodell (PM2) Zieltyp-Wichtungswerte (WT_II) umfasst, die den kennzeichnenden Zieltyp-Parametern (PT1 - PT9) direkt oder mittelbar zugeordnet sind, bei dem das Anpassen des weiteren Präferenzmodells (PM2) mittels Anpassens eines oder mehrerer Zieltyp-Wichtungswerte (WT_II) erfolgt.

13. Verfahren nach Anspruch 12, bei dem das weitere Präferenzmodell (PM2) ein neuronales Netz umfasst.

14. Verfahren nach einem der Ansprüche 11 bis 13, bei dem mindestens ein kennzeichnender Zieltyp-Parameter (PT1 - PT9) charakteristisch ist für eine örtliche Abhängigkeit des Zieltyps (POIT).

15. Verfahren nach einem der Ansprüche 11 bis 14, bei dem mindestens ein kennzeichnender Zieltyp-Parameter (PT1 - PT9) charakteristisch ist für eine zeitliche Abhängigkeit des Zieltyps (POIT).

16. Verfahren nach Anspruch 15, bei dem mindestens ein kennzeichnender Zieltyp-Parameter (PT1 - PT9) repräsentativ ist für den jeweiligen Tag, Monat, Jahr oder Jahreszeit oder einen vorgegebenen Jahresabschnitt.

17. Verfahren nach einem der Ansprüche 15 oder 16, bei dem mindestens ein kennzeichnender Zieltyp-Parameter (PT1 - PT9) repräsentativ ist für einen Tageszeitbereich.

18. Verfahren nach einem der Ansprüche 11 bis 17, bei dem mindestens ein kennzeichnender Zieltyp-Parameter (POIT) repräsentativ ist für eine Fahrzeitdauer.

19. Verfahren nach einem der Ansprüche 11 bis 18, bei dem mindestens ein kennzeichnender Zieltyp-Parameter (PT1 - PT9) charakteristisch ist für eine Betriebsgröße eines Fahrzeugs.

20. Vorrichtung zum automatischen Vorgeben einer Auswahl an Zielen (POI), die von Interesse sind, bei der
- jedem einzelnen Ziel (POI_I) kennzeichnende Parameter (P1 - P9) zugeordnet sind, die ausgebildet ist zum
- Ermitteln eines Präferenzwertes (PV_I) für das jeweilige Ziel (PV_I) mittels eines für mehrere Ziele (POI) vorgegebenen Präferenzmodells (PM1) abhängig von den kennzeichnenden Parametern (P1 - P9), wobei das Präferenzmodel (PM1) Wichtungswerte (W_II) umfasst, die den kennzeichnenden Parametern (P1 - P9) direkt oder mittelbar zugeordnet sind,
- Sortieren der einzelnen Ziele (POI_I) abhängig von den jeweiligen Präferenzwerten (PV_I) und Darbieten dieser in dieser Reihenfolge und
- Anpassen des Präferenzmodells (PM1) abhängig von kennzeichnenden Parametern (P1 - P9) eines dann tatsächlich ausgewählten Ziels (POI_S) und zwar durch Anpassen eines oder mehrerer Wichtungswerte (W_II).

## Claims

1. Method for automatically prescribing a selection of destinations (POI) which are of interest, in which
- each individual destination (POI_I) has associated characterizing parameters (P1 - P9),
- a preference value (PV_I) is ascertained for the respective destination (POI_I) using a preference model (PM1), which is prescribed for a plurality of destinations (POI), on the basis of the characterizing parameters (P1 - P9), wherein the preference model (PM1) comprises weighting values (W_II) which are directly or indirectly associated with the characterizing parameters (P1 - P9),
- the respective preference values (PV_I) are taken as a basis for sorting the individual destinations (POI_I) and presenting them in this order,
- the preference model (PM1) is adapted on the basis of characterizing parameters (P1 - P9) of a then actually selected destination (POI_S), specifically by adapting one or more weighting values (W_II).

2. Method according to Claim 1, in which the preference model (PM1) comprises a neural network.

3. Method according to one of the preceding claims, in which at least one characterizing parameter (P1 - P9) is characteristic of a local dependency of the destination (POI).

4. Method according to Claim 3, in which at least one characterizing parameter (P1 - P9) is representative of a distance from a current position.

5. Method according to one of Claims 3 and 4, in which at least one characterizing parameter (P1 - P9) is representative of a distance from a journey destination.

6. Method according to one of Claims 4 to 5, in which at least one characterizing parameter (P1 - P9) is representative of the nature of the position of the destination.

7. Method according to one of the preceding claims, in which at least one characterizing parameter (P1 - P9) classifies the respective destination (POI_I).

8. Method according to one of the preceding claims, in which at least one characterizing parameter (P1 - P9) is representative of a company label or a brand.

9. Method according to one of the preceding claims, in which at least one characterizing parameter (P1 - P9) is representative of the nature of the cuisine.

10. Method according to one of the preceding claims, in which at least one characterizing parameter (P1 - P9) is characteristic of a temporal dependency of the destination (POI).

11. Method according to one of the preceding claims, in which the destinations (POI) are respectively associated with a destination type (POIT), and the respective destination types (POIT_I) have associated characterizing destination type parameters (PT1 - PT9),
- a destination type preference value (PVT) is ascertained for the respective destination type (POIT_I) using a further preference model (PM2), which is prescribed for a plurality of destination types (POIT), on the basis of the characterizing destination type parameters (PT1 - PT9),
- the respective destination type preference values (PVT_I) are taken as a basis for sorting the individual destination types (POIT_I) and presenting them in this order,
- the further preference model (PM2) is adapted on the basis of the characterizing destination type parameters (PT1 - PT9) of a then actually selected destination type (POIT_S).

12. Method according to Claim 11, in which the further preference model (PM2) comprises destination type weighting values (WT_II) which are directly or indirectly associated with the characterizing destination type parameters (PT1 - PT9), in which the further preference model (PM2) is adapted by adapting one or more destination type weighting values (WT_II).

13. Method according to Claim 12, in which the further preference model (PM2) comprises a neural network.

14. Method according to one of Claims 11 to 13, in which at least one characterizing destination type parameter (PT1 - PT9) is characteristic of a local dependency of the destination type (POIT).

15. Method according to one of Claims 11 to 14, in which at least one characterizing destination type parameter (PT1 - PT9) is characteristic of a temporal dependency of the destination type (POIT).

16. Method according to Claim 15, in which at least one characterizing destination type parameter (PT1 - PT9) is representative of the respective day, month, year or season or a prescribed period of the year.

17. Method according to one of Claims 15 and 16, in which at least one characterizing destination type parameter (PT1 - PT9) is representative of a daytime range.

18. Method according to one of Claims 11 to 17, in which at least one characterizing destination type parameter (POIT) is representative of a travelling time.

19. Method according to one of Claims 11 to 18, in which at least one characterizing destination type parameter (PT1 - PT9) is characteristic of an operating variable for a vehicle.

20. Apparatus for automatically prescribing a selection of destinations (POI) which are of interest, in which
- each individual destination (POI_I) has associated characterizing parameters (P1 - P9), said apparatus being designed to
- ascertain a preference value (PV_I) for the respective destination (PV_I) using a preference model (PM1), which is prescribed for a plurality of destinations (POI), on the basis of the characterizing parameters (P1 - P9), wherein the preference model (PM1) comprises weighting values (W_II) which are directly or indirectly associated with the characterizing parameters (P1 - P9),
- sort the individual destinations (POI_I) on the basis of the respective preference values (PV_I), and present said destinations in this order, and
- adapt the preference model (PM1) on the basis of characterizing parameters (P1 - P9) of a then actually selected destination (POI_S), specifically by adapting one or more weighting values (W_II).

## Revendications

1. Procédé permettant de déterminer automatiquement une sélection de destinations (POI) présentant un intérêt, au cours duquel
- des paramètres caractéristiques (P1 - P9) sont attribués à chaque destination (POI_I),
- pour la destination respective (PIO_I), une valeur préférentielle (PV_1) est déterminée, en fonction des paramètres caractéristiques (P1 - P9), au moyen d'un modèle préférentiel (PM1) prescrit pour plusieurs destinations (POI), le modèle préférentiel (PM1) comportant des valeurs de pondération (W_II) qui sont affectées directement ou indirectement aux paramètres caractéristiques (P1 - P9),
- les différentes destinations (POI_I) sont triées sur la base des valeurs préférentielles respectives (PV_I) et sont offertes dans cet ordre,
- le modèle préférentiel (PM1) est adapté en fonction des paramètres caractéristiques (P1 - P9) d'une destination (POI_S) alors effectivement sélectionnée et, ceci, par adaptation de l'une ou de plusieurs valeurs de pondération (W_II).

2. Procédé selon la revendication 1, dans lequel le modèle préférentiel (PM1) comprend un réseau neuronal.

3. Procédé selon l'une des revendications précédentes, dans lequel au moins un paramètre caractéristique (P1 - P9) indique que la destination (POI) dépend du lieu.

4. Procédé selon la revendication 3, dans lequel au moins un paramètre caractéristique (P1 - P9) est représentatif pour une distance par rapport à la position actuelle.

5. Procédé selon l'une des revendications 3 ou 4, dans lequel au moins un paramètre caractéristique (P1 - P9) est représentatif pour une distance par rapport à une destination.

6. Procédé selon l'une des revendications 4 à 5, dans lequel au moins un paramètre caractéristique (P1 - P9) est représentatif pour le genre de situation de la destination.

7. Procédé selon l'une des revendications précédentes, dans lequel au moins un paramètre caractéristique (P1 - P9) représente la classification de la destination respective (POI_I).

8. Procédé selon l'une des revendications précédentes, dans lequel au moins un paramètre caractéristique (P1 - P9) est représentatif pour un signe distinctif d'une entreprise ou pour une marque.

9. Procédé selon l'une des revendications précédentes, dans lequel au moins un paramètre caractéristique (P1 - P9) est représentatif pour le genre de cuisine.

10. Procédé selon l'une des revendications précédentes, dans lequel au moins un paramètre caractéristique (P1 - P9) indique que la destination (POI) dépend de l'heure.

11. Procédé selon l'une des revendications précédentes, dans lequel les destinations (POI) correspondent chacune à un type de destination (POIT) et un paramètre caractéristique de type de destination (PT1 - PT9) est affecté aux types de destination (POIT_I) respectifs,
- pour chaque type de destination (POIT_I), une valeur préférentielle (PVT) de type de destination est déterminée, en fonction des paramètres caractéristiques de type de destination (PT1 - PT9), au moyen d'un autre modèle préférentiel (PM2) prescrit pour plusieurs types de destination (POIT),
- les différents types de destinations (POIT_I) sont triés sur la base des valeurs préférentielles respectives (PVT_I) de types de destination et offerts dans cet ordre,
- le deuxième modèle préférentiel (PM2) est adapté en fonction des paramètres caractéristiques (PT1 - PT9) d'un type de destination (POIT_S) alors effectivement sélectionné.

12. Procédé selon la revendication 11, dans lequel le deuxième modèle préférentiel (PM2) comprend des valeurs de pondération (WT_II) pour type de destination qui sont affectées directement ou indirectement aux paramètres caractéristiques (PT1 - PT9) de types de destinations, dans lequel l'adaptation du deuxième modèle préférentiel (PM2) se fait par adaptation de l'une ou de plusieurs valeurs de pondération (WT_II) pour type de destination.

13. Procédé selon la revendication 12, dans lequel le deuxième modèle préférentiel (PM2) comprend un réseau neuronal.

14. Procédé selon l'une des revendications 11 à 13, dans lequel au moins un paramètre caractéristique (PT1 - PT9) de types de destinations indique que le type de destination (POIT) dépend du lieu.

15. Procédé selon l'une des revendications 11 à 14, dans lequel au moins un paramètre caractéristique (PT1 - PT9) de types de destinations indique que le type de destination (POIT) dépend de l'heure.

16. Procédé selon la revendication 15, dans lequel au moins un paramètre caractéristique (PT1 - PT9) de types de destinations est représentatif pour le jour respectif, le mois respectif, l'année respective ou la saison respective ou une période de temps respective de l'année.

17. Procédé selon l'une des revendications 15 ou 16, dans lequel au moins un paramètre caractéristique (PT1 - PT9) de types de destinations est représentatif pour une période de temps de la journée.

18. Procédé selon l'une des revendications 11 à 17, dans lequel au moins un paramètre caractéristique (POIT) de types de destinations est représentatif pour une durée de trajet.

19. Procédé selon l'une des revendications 11 à 18, dans lequel au moins un paramètre caractéristique (PT1 - PT9) de types de destinations caractérise une grandeur de fonctionnement d'un véhicule automobile.

20. Dispositif permettant de déterminer automatiquement une sélection de destinations (POI) présentant un intérêt, dans lequel
- des paramètres caractéristiques (P1 - P9) sont attribués à chaque destination (POI_I),
- pour la destination respective (POI_I), une valeur préférentielle (PV_I) est déterminée, en fonction des paramètres caractéristiques (P1 - P9), au moyen d'un modèle préférentiel (PM1) prescrit pour plusieurs destinations (POI), le modèle préférentiel (PM1) comportant des valeurs de pondération (W_II) qui sont affectées directement ou indirectement aux paramètres caractéristiques (P1 - P9),
- les différentes destinations (POI_I) sont triées sur la base des valeurs préférentielles respectives (PV_I) et sont offertes dans cet ordre,
- le modèle préférentiel (PM1) est adapté en fonction des paramètres caractéristiques (P1 - P9) d'une destination (POI_S) alors effectivement sélectionnée et, ceci, par adaptation de l'une ou de plusieurs valeurs de pondération (W_II).
